# EUROPEAN PATENT APPLICATION

(11) **EP 2 444 842 A1**
(43) Date of publication of application: **25.04.2012**
(21) Application number: 11185984.9
(22) Date of filing: 20.10.2011
(51) Int. Cl.: G03B 3/04

(54) **An apparatus for the detection of palm prints having adjustment devices**

(30) Priority: 22.10.2010 IT TO20100857
(71) Applicant: Green Bit S.p.A., 10095 Grugliasco (TO) (IT)
(72) Inventor: Prytkov, Anton Sergheevich, 10095 Grugliasco (Torino) (IT); Skripalshchikov, Alexander, 10095 Grugliasco (Torino) (IT)
(74) Representative: Bosotti, Luciano

(57) **Abstract**

An apparatus (1) for the detection of palm prints comprising:
- a main body (2);
- an acquisition screen (4);
- an optical unit (5); and
- an image-acquisition unit (6) co-operating with said optical unit (5) and provided for acquisition of images formed on said acquisition screen (4);
the apparatus comprises an adjustment assembly (7) including a first adjustment device (8) operatively connected to said image-acquisition unit (6) and configured for varying the position of said image-acquisition unit (6) with respect to said optical unit (5) .

## Description

### Field of the invention

The present invention relates to apparatuses for detecting palm prints and finger prints, in particular to apparatuses for recognizing palm prints and finger prints with an assembly for adjustment of the optics.

### General technical problem

Apparatuses for detecting palm prints generally comprise an optical unit and an image-acquisition unit configured for framing and acquiring an image of the palm of a hand or of a finger print obtained by the placement of the hand itself (or of a finger) on a glass and the subsequent reflection of the image towards the aforesaid optical unit by means of a plurality of mirrors.

The image is focused by the optical unit on an image-acquisition sensor of a CCD or CMOS type, the sensitive area of which must be exploited to the full to obtain a good image quality. In apparatuses of a known type recourse is had in general to compromise solutions, without an adjustment device. However, with said solutions a high image quality is hard to achieve.

There is consequently felt the need to provide an apparatus for the detection of palm prints (and finger prints) in which it is possible to make adjustments in order to position and exploit as much as possible the area of the image-acquisition sensor. Considering the characteristics of apparatuses of this type, it is necessary to provide an adjustment device that will enable sufficiently fine adjustments to be made.

### Object of the invention

The object of the present invention is to overcome the technical problems described previously.

In particular, the object of the present invention is to provide an apparatus for detecting finger prints with the possibility of making adjustments that will enable maximization of the area of the image-acquisition sensor effectively exploited during detection.

### Summary of the invention

The object of the invention is achieved by an apparatus for detection of finger prints having the features that form the subject of one or more of the ensuing claims, which form an integral part of the technical teaching provided herein in relation to the invention. In particular, the object is achieved by an apparatus having an adjustment assembly that enables maximization of image quality by correct positioning of the acquisition area of the sensor.

### Brief description of the drawings

The invention will now be described with reference to the annexed drawings, which are provided purely by way of non-limiting example and in which:
- Figure 1 is a perspective view of an apparatus for detecting palm prints and finger prints on the basis of one embodiment of the invention;
- Figure 2 is a view corresponding to that of Figure 1 with some components removed;
- Figure 3 is a view according to the arrow III of Figure 1, in which a plurality of components inside the apparatus of Figure 1 is represented with a dashed line;
- Figure 4 is a partially exploded perspective view of the apparatus of Figure 1 with some components removed for the sake of clarity;
- Figure 5 is a detailed view according to the arrow V of Figure 1 with some components removed;
- Figure 5A is a schematic representation, corresponding substantially to that of Figure 5, of a portion of the apparatus according to the invention;
- Figures 6A and 6B illustrate, with some components removed for the sake of clarity, a first operating sequence of the apparatus of Figure 1 in cross-sectional view according to the trace VI-VI of Figures 1, 3, and 5;
- Figures 7A and 7B illustrate, with some components removed for the sake of clarity, a second operating sequence of the apparatus of Figure 1 in one view;
- Figures 8A and 8B illustrate, with some components removed for the sake of clarity, a third operating sequence of the apparatus of Figure 1 in cross-sectional view according to the trace VIII-VIII of Figures 1, 3 and 5; and
- Figures 9A and 9B illustrate, with some components removed for reasons of clarity, a fourth operating sequence of the apparatus of Figure 1 in cross-sectional view according to the trace VI-VI.

### Detailed description of the invention

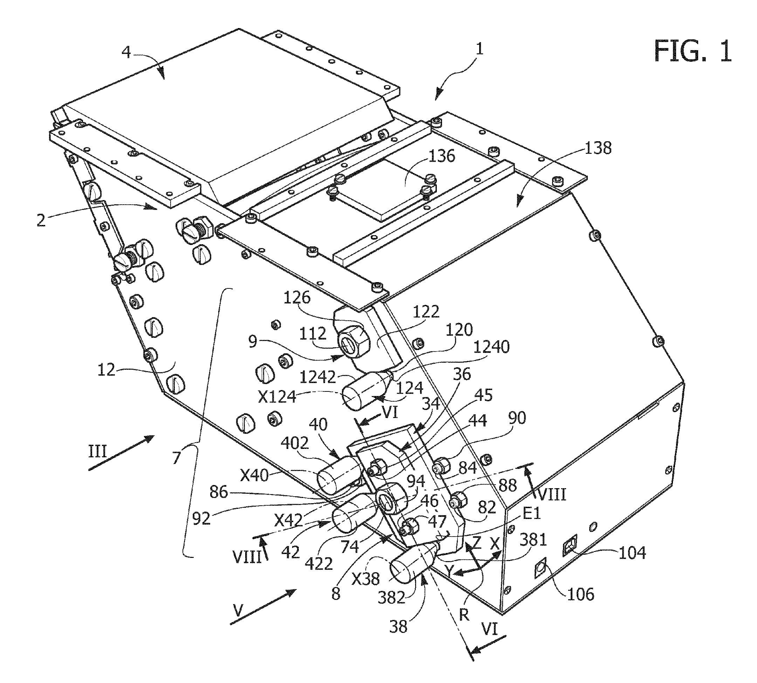

In Figure 1 designated by 1 is an apparatus for detecting palm prints and finger prints according to a preferred embodiment of the present invention. With reference to Figures 1 to 3, the apparatus 1 comprises a main body 2, an acquisition screen 4, an optical unit 5, an image-acquisition unit 6, and an adjustment assembly 7 including a first adjustment device 8 and a second adjustment device 9.

The main body 2 comprises a base 10 and a first side 12 and a second side 14, both orthogonal to the base 10 and mechanically fixed thereto.

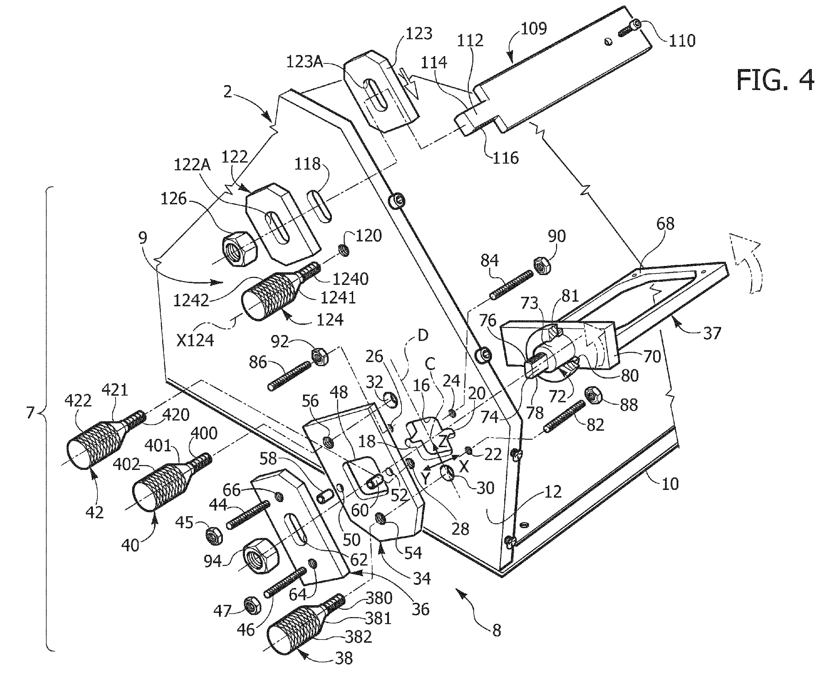

With reference to Figure 4, the first side 12 comprises a through cavity 16, having a substantially quadrangular shape with rounded vertices and in turn comprising a first recess 18 and a second recess 20 having an elongated shape.

Moreover, a reference system R defined by a right-handed triad, associated to the cavity 16 (but, as will be evident in what follows, used as reference also for other parts of the apparatus 1) is introduced and comprises:
- a first axis X orthogonal to the first side 12 and with positive reference direction pointing towards the inside of the main body 2,
- a second axis Y orthogonal to the axis X, belonging to the plane of the first side 12, substantially parallel to a line joining the two recesses 18, 20 and having a positive reference direction pointing towards the base 10;
- a third axis Z, which is orthogonal to both of the axes X, Y and also belongs to the plane of the first side 12 (the positive reference direction evidently points towards the optical unit 5).

Set around the through cavity 16, on opposite sides with respect to an axis D parallel to the axis Z and passing through a centre C of the cavity 16, are two pairs of threaded holes including respective threaded holes 22, 24 and 26, 28. The threaded holes 22, 24, 26 preferably have the same nominal diameter, whereas the hole 28 has a nominal diameter that is greater than that of the holes 22, 24, 26.

In addition, a first through hole 30 is preferably set on the axis D, at a distance from the cavity 16. A second through hole 32 is made on the first side 12 on the same side, with respect to the axis D, of the threaded holes 26, 28. The diameter of the through holes 30, 32 is significantly greater than the nominal diameters of the threaded holes 22, 24, 26 as likewise of the threaded hole 28.

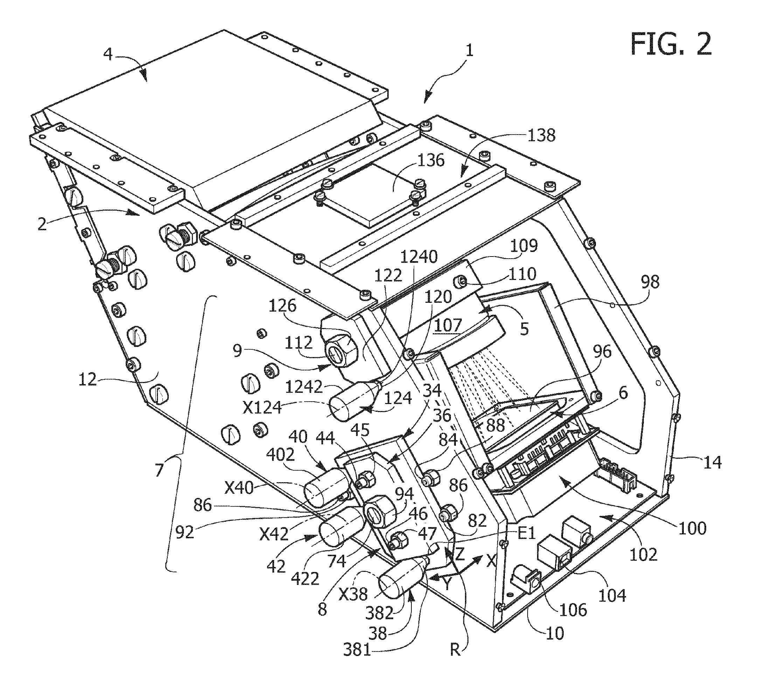

With reference to Figures 2, 3, 4 the first adjustment device 8 comprises a first plate 34, a second plate 36, a supporting frame 37 carrying the image-acquisition unit 6, a first adjustment element 38, a second adjustment element 40, and a third adjustment element 42.

The adjustment elements 38, 40, 42 have a similar structure and comprise:
- respective threaded shafts 380, 400, 420;
- respective conical stretches 381, 401, 422, adjacent to the threaded shafts 380, 400, 420; and
- respective grips 382, 402, 422 adjacent to the conical stretches 381, 401, 421.

The adjustment device 8 further comprises a fourth adjustment element 44, including a preferably headless screw with hexagon set-in in the shaft, engaged on which is a nut 45, and a fifth adjustment element 46, which also includes a preferably headless screw with hexagon set-in in the shaft, engaged on which is a nut 47.

The first mobile plate 34 has a preferably rectangular shape with two chamfered vertices and comprises a central through cavity 48, having a quadrangular shape with rounded vertices and a shorter extension than the through cavity 16, two through holes 50, 52 set on opposite sides with respect to the cavity 48, and two threaded holes 54, 56, which have a nominal diameter smaller than that of the holes 30, 32.

The threaded hole 54 is set substantially in a position corresponding to the centre of the plate 34 and at one end thereof, whereas the hole 56 at a vertex of the plate 34 opposite to the end in the proximity of which the hole 54 lies.

Housed within the holes 50, 52 are respective dowels 58, 60, which have a cylindrical shape and a length greater than the thickness of the plate 34 so as to project therefrom, as will be described in greater detail in what follows.

The second plate 36 also has a rectangular shape but has a smaller extension than the first plate 34. The second plate 36 comprises a central eyelet 62 and a pair of threaded holes 64, 66 set on opposite sides with respect to the eyelet 62 and aligned to one another.

The supporting frame 37, here represented rotated with respect to its effective position for reasons of clarity, comprises a frame 68 fixed to a head 70 orthogonal thereto. Fixed to the head 70 is a shank 72 comprising a cylindrical base 73 and a flat terminal 74 provided with two threaded sides 76, 78. A ring 80 made of elastomeric material and a washer 81 preferably made of metal material are fitted on the cylindrical base 73, where the ring 80 is in direct contact with the head 70. The washer 81 further comprises a central hole 81A having a conical shape.

The effective position of the supporting frame 37, as will emerge clearly from the ensuing description, can be obtained by rotating it in the direction indicated by the dashed and double-dotted arrow in Figure 4 until the flat terminal is aligned to the eyelet 62 (in a position that would enable mutual coupling thereof).

The adjustment device 8 is assembled by setting the plates 34, 36 and the supporting frame 37 on opposite sides with respect to the first side 12. In particular, the plates 34, 36 are set on one and the same side and externally with respect to the main body 2, where the term "externally" (or in general the adjective "external") is meant in the present description to indicate a position in the space that is not comprised between the sides 12, 14 and the base 10.

Instead, the supporting frame 37 is mounted between the sides 12, 14 inside the main body 2 with the flat terminal 74 and the cylindrical base 73 traversing the through cavity 16 on the side 12. The flat terminal 74 moreover traverses a sequence of openings comprising the central through cavity 48 and the eyelet 62.

Three fixing screws 82, 84, 86 of a preferably headless type and with hexagon set-in directly in the shaft, are engaged, respectively, in the threaded holes 22, 24, 26. Three nuts 88, 90, 92 are engaged, respectively, on the screws 82, 84, 86 and are brought to bear upon the first side 12 externally with respect to the main body 2.

In addition, screwed on the flat terminal 74 is a nut 94, which grips the plates 36, 34 on one another and against the side 12 and moreover grips the head 70, the ring 80, and the washer 81 on the side 12 inside to the main body 2. Following upon gripping of the nut 94, the fixing screws 82, 84, 86 are screwed within the respective threaded holes until contact thereof with the head 70 is obtained. It should be noted that preferably a slight interference is created between the fixing screws 82, 84, 86 and the head 70 to keep the latter, as likewise the entire supporting frame 37, stably in position. The nuts 88, 90, 92 are then screwed on the screws 82, 84, 86 and brought to bear upon the side 12.

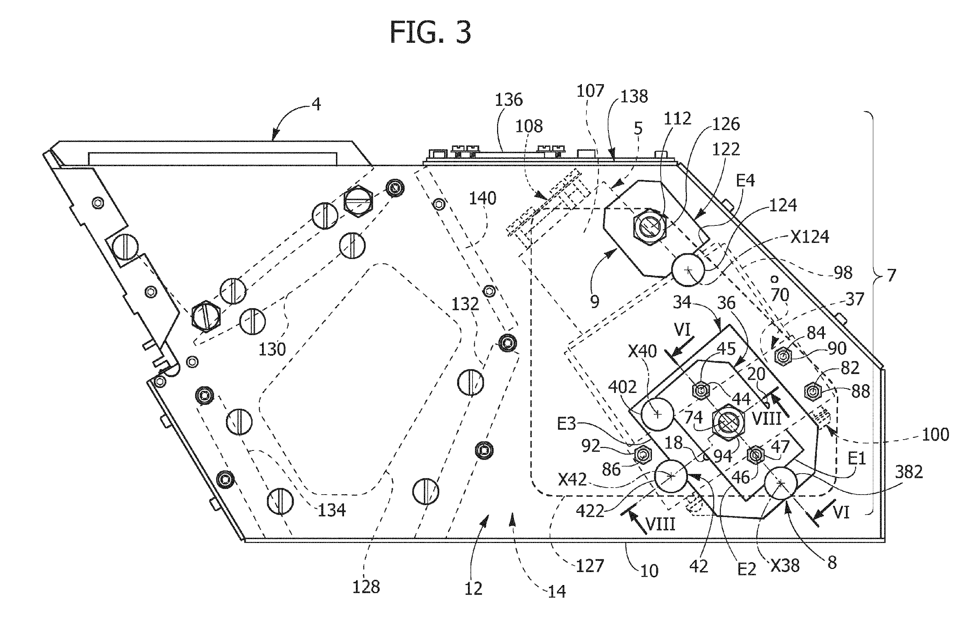

With reference to Figure 3, which illustrates the adjustment device 8 in an assembled configuration, there may be appreciated one of the possible alignments between the cavities 16, 48, the eyelet 62, and the flat terminal 74. It should moreover be noted that the dowels 58, 60 project from the plate 34 towards the first side 12 and are slidably engaged respectively in the recesses 18, 20 of the through cavity 16.

The threaded holes 54, 56 are aligned, respectively, with the through holes 30, 32.

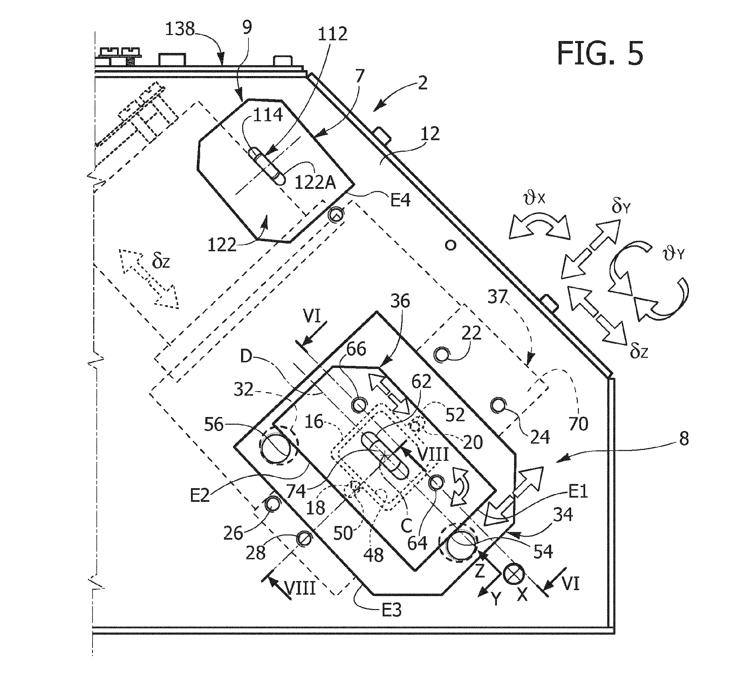

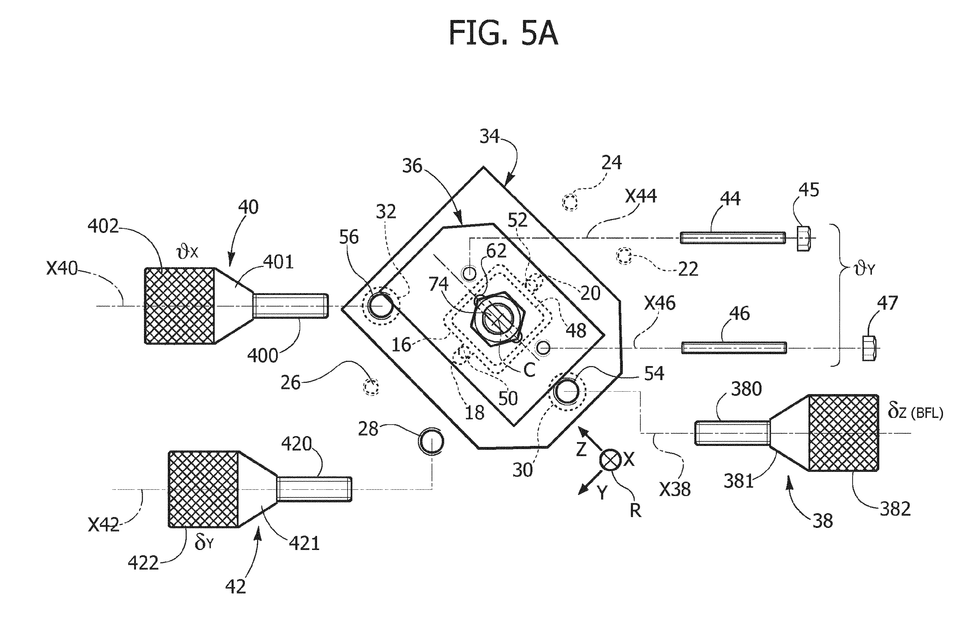

With reference to Figures 1 to 4 and 5A, the adjustment elements 38, 40, 41, 44, 46 are engaged in the device 8 in the following way:
- the first adjustment element 38 is engaged by means of the threaded stretch 380 within the threaded hole 54, possibly traversing also the through hole 30, and the conical stretch 381 bears upon an edge E1 of the plate 36,
- the second adjustment element 40 is engaged by means of the threaded stretch 400, which possibly traverses also the through hole 32, within the threaded hole 56, and the conical stretch 401 bears upon an edge E2 of the plate 36 adjacent and orthogonal to the edge E1,
- the third adjustment element 42 is engaged by means of the threaded stretch 420 within the threaded hole 28, and the conical stretch 421 bears upon an edge E3 of the plate 34, and
- the elements 44, 46 are engaged, respectively, within the holes 66, 64, until they come to bear upon the plate 34, and the respective nuts 45, 47 are screwed thereon until they come to bear upon the plate 36.

With reference to Figure 2, fixed on the frame 68 of the supporting frame 37 is the image-acquisition unit 6 comprising an image-acquisition sensor (the so-called "area image sensor") 96, for example a CCD or CMOS sensor, a wall 98 fixed to the frame 68, and an electronic unit 100 co-operating with the image-acquisition sensor 96.

The electronic unit 100 is operatively connected to an electronic card 102 set on the base 10 between the sides 12, 14 and comprising a USB interface 104 for connection to a computer and a supply socket 106.

With reference to Figures 2, 3, 4, the optical unit 5 comprises an objective 107 including inside it one or more lenses (not visible in the figures) and a liquid-crystal shutter 108, which is set in a position corresponding to a front lens of the objective 107 and is connected to the second adjustment device 9. The second adjustment device 9 comprises a flat member 109 fixed to the optical unit 5 by means of a screw 110 and comprising a flat terminal 112 including two threaded sides 114, 116. The flat terminal 112 is inserted in a corresponding eyelet 118, elongated in a direction parallel to the axis Z, provided on the side 12 adjacent to a threaded hole 120.

The second adjustment device 9 further comprises a third plate 122 and a fourth plate 123, which are set on opposite sides with respect to the first side 12 and comprise respective eyelets 122A, 123A in a substantially central position, a sixth adjustment element 124, and a nut 126 gripping the plate 108 and the plates 122, 123 on the side 12. It should be noted that the eyelets 122A, 123A and 118 are located in a position substantially aligned to one another.

The sixth adjustment element 124 has a structure similar to that of the elements 38, 40, 42 and comprises:
- a threaded stretch 1240,
- a conical stretch 1241, and
- a grip 1242.

The sixth adjustment element 124 is moreover engaged by means of the threaded stretch 1240 within the hole 120 so that the conical stretch 1241 bears upon an edge E4 of the plate 122 and is able to turn around a respective axis X124.

The second side 14 comprises a first window 127 and a second window 128, which are provided in a position corresponding to the ensemble constituted by the optical unit 5 and the acquisition unit 6 and in a position corresponding to the screen 4, respectively.

With reference to Figure 3, a plurality of further optical elements is installed within the main body 2, in particular:
- a converging lens 130 set adjacent to the screen 4, which preferably has a body shaped like a prism with pentagonal base (or quadrilateral base, according to the cut of the material);
- a first mirror 132 facing said converging lens;
- a second mirror 134 facing the first mirror 132; and
- a third mirror 136 fixed to a covering plate 138, in turn fixed on the top of the sides 12, 14.

A mask 140 is moreover fixed inside the main body 2 in the proximity of the third mirror 136.

Operation of the apparatus 1 and of the device 8 is described in what follows.

The apparatus 1 is configured for detecting the prints of the palm of the hand or of a finger tip of a subject by means of the screen 4 and the optical unit 6.

An operator responsible for use of the apparatus 1, for example a police officer and/or a public security officer, asks a third subject to lay the palm of his/her hand on the screen 4. From the screen 4, the image that is formed thereon is focused by the converging lens 130 on the first mirror 132 giving rise to incident rays converging towards the mirror 132 itself.

From here, the rays are reflected towards the second mirror 134, by which they are further reflected until they converge in a beam that impinges upon the third mirror 136, which in turn reflects it towards the optical unit 5.

Finally, the image is transferred by the optical unit 5 to the sensor 96, which transmits it to a computer (not illustrated) connected to the apparatus 1 by means of the USB interface 104.

In order to obtain the best possible image quality, it is necessary to adjust the position of the optical unit 5 and of the acquisition unit 6 by adjusting the position of the plate 109 and of the supporting frame 37.

The device 8 is provided for adjustment of the position of the supporting frame 37 and of the acquisition unit 6 with respect to the optical unit 5 by acting on each individual degree of freedom thereof.

In particular, with respect to the reference system R, the supporting frame 37 and the acquisition unit 6 have five degrees of freedom in space corresponding to the rotations ϑₓ, ϑ_{y} about the axes, X, Y, respectively, and to the displacements δₓ, δ_{y}, δ_{z} along the axes X, Y, Z, respectively. The displacements with the four degrees of freedom of the system are both absolute displacements with respect to the reference system R and relative displacements with respect to the optical unit 5.

The adjustment elements 38, 40, 42, 44, 46 and the nut 94 act on distinct degrees of freedom; in particular:
- the first adjustment element 38 is rotatable about a first axis of rotation X38, coinciding with a geometrical axis thereof, and can be operated in rotation for governing a first linear movement, in a direction parallel to the axis Z, of the second plate 36 with respect to the first plate 34 and of the supporting frame 37 and acquisition unit 6 with respect to the optical unit 5, and is consequently associated to the degree of freedom δ_{z},
- the second adjustment element 40 is rotatable about a second axis of rotation X40, coinciding with a geometrical axis thereof, and can be operated in rotation for governing a first movement of rotation, about the axis X, of the second plate 36 with respect to the first plate 34 and of the supporting frame 37 and acquisition unit 6 with respect to the optical unit 5, and is consequently associated to the degree of freedom ϑₓ,
- the third adjustment element 42 is rotatable about a third axis of rotation X42, coinciding with a geometrical axis thereof, and can be operated in rotation for governing a second linear movement, in a direction parallel to the axis Y, of the first plate 34 with respect to the first side 12 and of the supporting frame 37 and acquisition unit 6 with respect to the optical unit 5, and is consequently associated to the degree of freedom δ_{y},
- the fourth and fifth adjustment elements 44, 46 are able to turn about respective axes of rotation X44, X46, coinciding with geometrical axes thereof, and can be operated in rotation for governing a second movement of rotation, about the axis Y, of the second plate 36 with respect to the first plate 34 and of the supporting frame 37 and acquisition unit 6 with respect to the optical unit 5, and are consequently associated to the degree of freedom ϑ_{y}, and
- the nut 94 governs a linear movement along the axis X by applying, by being screwed or unscrewed on the flat terminal 74, different axial forces along it and is consequently associated to the degree of freedom δₓ.

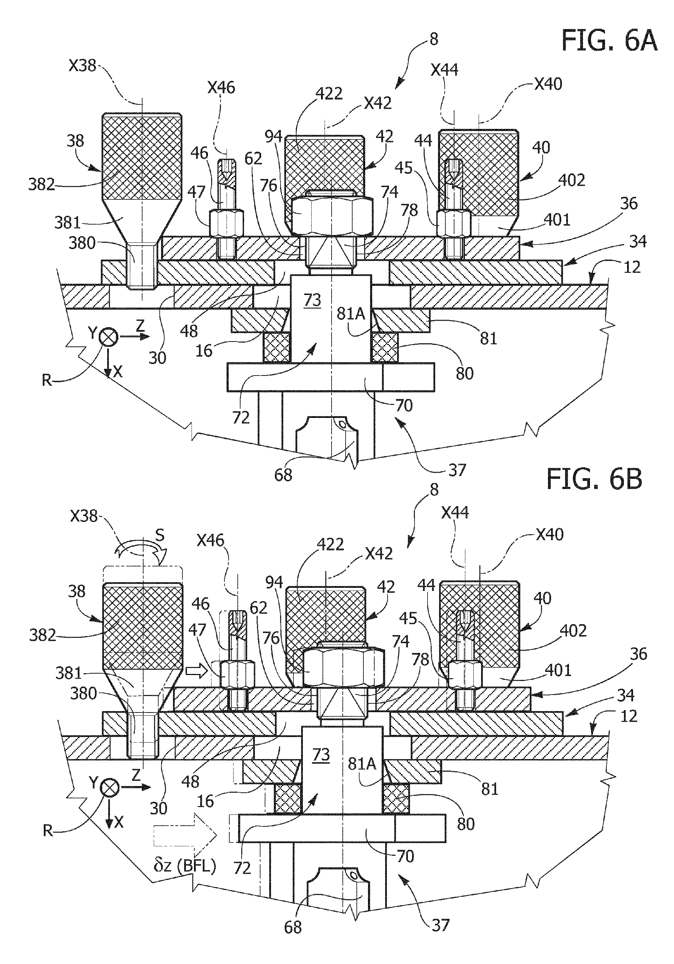

With reference to Figures 6A, 6B, 7A, 7B, 8A, 8B and 9A, 9B there now follows a description of the modalities with which the displacements and rotations associated to the individual degrees of freedom of the supporting frame 37 are obtained. The aforesaid figures illustrate operating sequences of the adjustment device 8 where, in the figures that represent final positions following upon a movement, the dashed and double-dotted line indicates the initial position.

With reference to Figures 6A, 6B, 7A, 7B, 8A, 8B the displacements δ_{y}, δ_{z} and the rotation ϑₓ are governed, as described, via actuation in rotation of the respective adjustment elements 38, 40, 42.

The first adjustment element 38 illustrated in Figure 6A is engaged inside the hole 54 by means of the respective threaded stretch 380, and the conical stretch 381 bears upon the edge E1 of the plate 36.

With reference to Figure 6B, by rotating the element 38 about the axis X38 in a direction S that causes screwing of the threaded stretch 380 within the hole 54 there is brought about a translation of the plate 36 with respect to the plate 34 in a direction parallel to the axis Z and concordant with the one chosen as reference in the system R, this evidently being a consequence of the variation of the distance between the point of contact of the conical stretch 381 on the edge E1 and the axis of rotation X38 of the element 38.

In particular, if the element 38 is rotated in the direction S within the hole 54, there is brought about a recession of the plate 36 with respect to the axis of rotation X38 of the element 38. The direction S, as will be appreciated by the person skilled in the branch, is the same for all the adjustment elements of the apparatus 1 in the case of all right-handed threads. Of course, the person skilled in the branch will appreciate that what has been described herein applies indifferently (except for obvious changes of orientation) also in the case of left-handed threads or of threads with non-uniform orientation between the various adjustment elements.

Rigidly translating together with the plate 36 are all the components fixed with respect thereto or operatively connected thereto, including:
- the adjustment elements 44, 46,
- the nut 94 and the entire supporting frame 37,
- the shank 72, the ring 80, and the washer 81,
- the acquisition unit 6, including the image-acquisition sensor 96.

It should be noted that the washer 81 slides on the side 12 inside the main body 2 despite the action of the gripping force exerted by means of the nut 94.

The way in which the adjustment elements 40, 42 act on the plates 34, 36, respectively, is conceptually similar to what has just been described for the element 38.

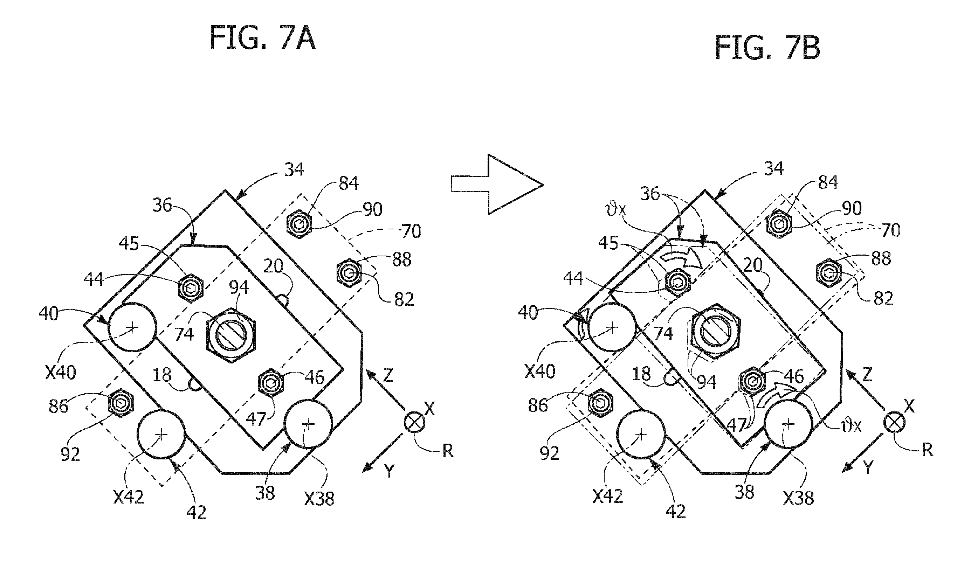

With reference to Figures 7A, 7B, by driving in rotation the element 40 (Figure 7B) it is possible to govern a rotation of the supporting frame 37 and of the acquisition unit 6 about the axis X. In particular, by rotating the element 40 about the axis X40 in the direction S that brings about screwing thereof within the corresponding threaded hole 56, the action of the conical stretch 401 on the edge E2 produces a recession of the latter and of the plate 36 from the axis X40, with modalities altogether similar to what has been described for the element 38. The plate 34 remains substantially stationary, whilst the plate 36 slides thereon.

The resulting displacement of the plate 36 (which can be appreciated in the sequence defined by Figure 7A and Figure 7B) is a rotation about the axis X since the relative movement of the edge E1 with respect to the conical stretch 381 of the element 38 (with which it is into contact) is a movement of rolling without sliding.

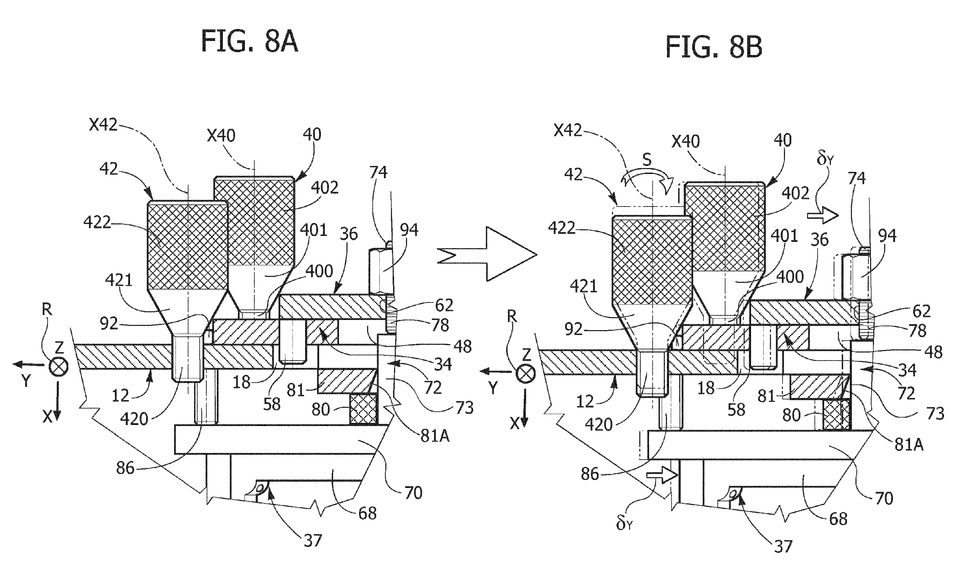

With reference to Figures 8A, 8B, also by driving in rotation the element 42 about the respective axis X42 it is possible to govern a displacement of the supporting frame 37 and of the acquisition unit 6 in a direction parallel to the axis Y and sense opposite to the one chosen as reference for the system R.

By driving in rotation the element 42 in the direction S that causes screwing thereof within the corresponding threaded hole 28, the action of the conical stretch 421 on the edge E3 causes a recession of the latter and of the plate 34 from the axis of rotation X42. It should be noted that, in this case, the plate 36 translates rigidly together with the plate 34, and the supporting frame 37 and the acquisition unit 6 therewith. In fact, the plate 34 is drawn by the plate 36 thanks to the simultaneous action of the gripping force produced by the nut 94 and to the constraint reaction of the conical stretches 381, 401 on the edges E1, E2.

With reference to Figure 8B, it should moreover be noted that the movement of the plate 34 in a direction parallel to the axis Y is guided by means of the dowels 58, 60 that are engaged within the recesses 18, 20 (visible in Figure 8B is only the coupling between the dowel 58 and the recess 18, but the person skilled in the art will understand that the two couplings are altogether similar). In addition, the diameter of the holes 30, 32 is sufficiently large as to follow the displacements of the adjustment elements 38, 40 preventing risks of interference even in the case where the respective threaded stretches 380, 400 were to project within the aforesaid holes 30, 32.

What has been described above establishes a substantial equivalence between operation of the three adjustment elements 38, 40, 42, it remaining understood that they control different degrees of freedom. In fact, when the adjustment elements 38, 40, 42 are rotated in the screwing direction within the respective threaded holes 54, 28, 56, they always produce a recession of the plate that they bear upon with respect to their own axis of rotation X38, X40, X42.

It should moreover be noted that the fixing screws 82, 84, 86 are slightly loosened with respect to the head 70 during the movements imparted via the elements 38, 40, 42, but the head 70 slides with respect to them. As soon as the desired position of the supporting frame 37 is reached, it is possible to screw the fixing screws 82, 84, 86 once again within the respective threaded holes so as to fix the aforesaid position.

In addition, it is possible to use the fixing screws 82, 84, 86 for governing minor three-dimensional movements of the supporting frame 37 in the case where this is necessary. They can modify in fact the position of the head 70 with respect to the side 12 simply by being screwed or unscrewed in the threaded holes in which they are engaged.

Hence, basically, each of the adjustment elements 38, 40, 42 is configured for exerting a thrust on one of the plates 34, 36 in order to vary the distance between the plate itself and its own axis of rotation.

In order to bring the plates 34, 36 back into the positions that they occupied prior to actuation of the elements 38, 40, 42, it is possible, after prior rotation of the elements 38, 40, 42 in a direction opposite to the direction S in order to cause an unscrewing thereof with respect to the respective threaded holes, to use a tool with sliding beaks.

The tool must be coupled on the adjustment device 8 so that a first beak is engaged on an edge of the plate that is to be brought back into the initial position, and a second beak is engaged on one of the adjustment elements, in particular the one associated to the control of the degree of freedom for which it is desired to restore the initial position. After this, the beaks of the tool are tightened, and the edges E1, E2, E3 come back into contact with the corresponding conical stretches.

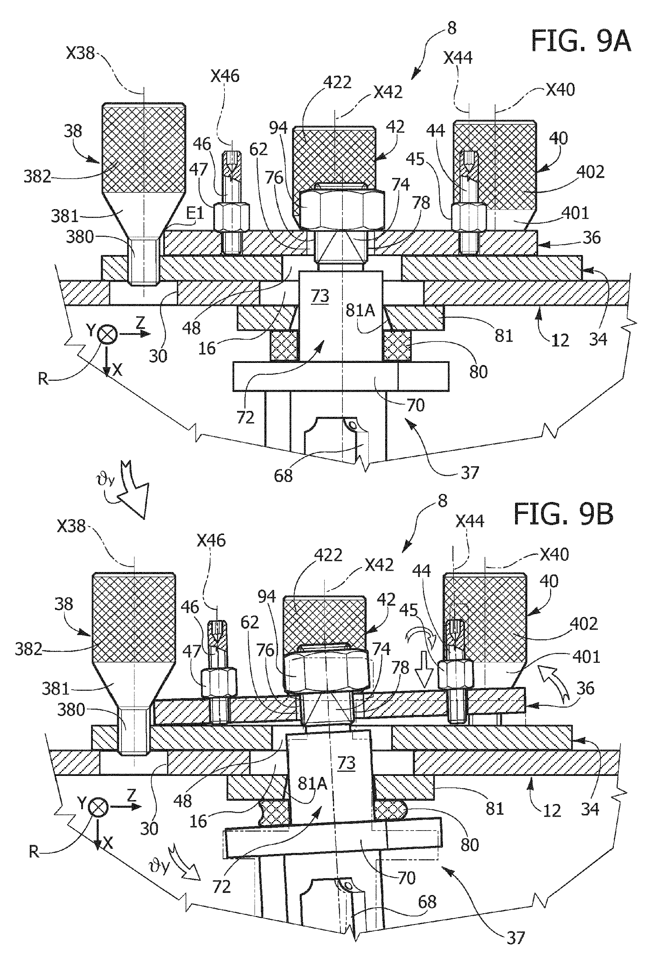

With reference to Figures 9A, 9B, the modality with which it is possible to govern a rotation of the supporting frame 37 about the axis Y by means of the fourth and the fifth adjustment element 44, 46 is instead different.

With reference to Figure 9A, starting from an initial position in which the plates 34, 36 are parallel and in contact with one another, by governing a rotation of the element 44 (chosen purely by way of example) in a direction S that causes screwing thereof within the hole 64, the element 44 progressively traverses the plate 36 causing a rotation thereof about the axis Y with respect to the plate 34. This occurs evidently because the adjustment element 46 cannot penetrate into the plate 34 in the remaining part of its rotation (Figure 9B).

A similar result is obtained with the rotation of the element 46, with the obvious difference as regards the direction of rotation, which is opposite with respect to the direction of rotation that can be governed by means of the element 44.

A person skilled in the branch will appreciate that the rotation about the axis Y of the supporting frame 37 and of the acquisition unit 6 installed thereon is possible thanks to the conical shape of the central hole 81A and it is moreover possible, thanks to the release of the action of the fixing screws 82, 84, 86 on the head 70 by unscrewing them (hence, substantially in a way similar to what has been described for the adjustment elements 38, 40, 42).

It should moreover be noted that the adjustment elements 44, 46 are configured for governing a rotation of the supporting frame 37 and of the optical unit 6 about the axis Y in two opposite directions, unlike the elements 38, 40, 42 by means of which it is possible to govern a rotation in just one direction.

Functionally identical with respect to the action of the elements 38, 40, 42 is the action of the adjustment element 124 on the plate 122. By driving in rotation the adjustment element 124 in a direction S that causes screwing thereof in the threaded hole 120, the action of the conical stretch 1241 on the edge E4 of the plate 122 causes a recession of the latter with respect to the axis X124 and a consequent translation of the plate 109 and of the optical unit 5 in a direction parallel to the axis Z and concordant with the one chosen as reference for the system R. It should be noted that the movement of the plate 109 and of the optical unit 5 is guided by the eyelet 118.

Finally, by rotating the nut 94 so as to cause screwing or unscrewing thereof with respect to the flat terminal 74, it is possible to vary the force acting along the axis X on the components tightened by the nut 94 itself and to obtain a deformation of the ring 80 of elastomeric material, which results in a variation of position along the axis X of the supporting frame 37 and of all the elements rigidly translating therewith with respect to the side 12 (hence with respect to the system R).

In brief, the first adjustment device 8 is operatively connected, by means of the supporting frame 37, to the acquisition unit 6 and can be operated for varying the position of the latter with respect to the optical unit 5, whilst the second adjustment device 9 is operatively connected to the optical unit 5 and is configured for varying the position of the latter with respect to the acquisition unit 6 and to the acquisition screen 4. The possibility of adjusting separately the position of the optical unit 5 and of the acquisition unit 6 enables an extremely high image quality always to be obtained. In itself, in any case, just the adjustment of the position of the acquisition unit 6 already offers extremely important advantages over known devices.

The displacements of the optical unit 5 and of the acquisition unit 6 in a direction parallel to the axis Z are of particular importance for the purposes of obtaining a high quality of image and exploitation of the area of the sensor 96.

By governing a displacement in a direction parallel to the axis Z by means of the adjustment elements 124 and 38 it is possible to vary, respectively, a front focal length (FFL), associated to the optical unit 5, and a back focal length (BFL) associated to the acquisition unit 6.

The apparatus 1 according to the invention hence enables adjustment of the position of the optical unit 6 in a simple, fast, and extremely intuitive way, since everything is performed manually by means of rotation of one or more adjustment elements. In addition, the first and second adjustment devices 8, 9 are without electronic components and hence do not require a dedicated software for their operation.

Nevertheless, the adjustment devices 8, 9 possess a very high flexibility: by envisaging the use of interchangeable adjustment elements 38, 40, 42 and 124 that differ from one another only as regards the conicity of the respective conical stretches 381, 401, 421, 1241, it is possible to vary the amount of adjustment given the same driving action imposed on the adjustment element.

By choosing in fact adjustment elements with a conical stretch with marked conicity, hence having a very large angle of aperture, the resulting displacement of the plate 34 (or 36) is considerably greater given the same angle of rotation imposed on the adjustment element, with respect to the displacement that would be obtained using adjustment elements with conical stretches with low conicity.

Of course, the details of construction and the embodiments may vary widely with respect to what has been described and illustrated herein, without thereby departing from the sphere of protection of the present invention, as defined by the annexed claims.

## Claims

1. An apparatus (1) for the detection of palm prints comprising:
- a main body (2);
- an acquisition screen (4);
- an optical unit (5); and
- an image-acquisition unit (6) co-operating with said optical unit (5) and configured for acquisition of images formed on said acquisition screen (4),
the apparatus (1) being **characterized in that** it comprises an adjustment assembly (7) including a first adjustment device (8) operatively connected to said image-acquisition unit (6) and operable for varying the position of said image-acquisition unit (6) with respect to said optical unit (5).

2. The apparatus (1) according to Claim 1, **characterized in that** said first adjustment device (8) comprises:
- a first plate (34);
- a second plate (36);
- a plurality of adjustment elements (38, 40, 42, 44, 46); and
- a supporting frame (37) coupled to said first and second plates (34, 36) and carrying said acquisition unit,
wherein said adjustment elements (38, 40, 42, 44, 46) are operable for producing a movement of one or both of said first and second plates (34, 36).

3. The apparatus (1) according to Claim 2, **characterized in that** said plurality of adjustment elements (38, 40, 42, 44, 46) comprises:
- a first adjustment element (38), a second adjustment element (40), and a third adjustment element (42), each including a threaded stretch (380, 400, 420), a conical stretch (381, 401, 421) adjacent to said threaded stretch (380, 400, 420), and a grip (382, 402, 422); and
- a fourth adjustment element (44) and a fifth adjustment element (46), each comprising a screw, preferably headless, on which a respective nut (45, 47) is engaged.

4. The apparatus (1) according to Claim 3, **characterized in that** said first plate (34) comprises a central through cavity (48) having a quadrangular shape and a first pair of threaded holes (54, 56), said first plate (34) further comprising a pair of holes (50, 52) housing respective dowels (58, 60) projecting beyond said first plate (34).

5. The apparatus (1) according to Claim 4, **characterized in that** said second plate (36) comprises an eyelet (62) and a second pair of threaded holes (64, 66) set on opposite sides with respect to said eyelet (62) .

6. The apparatus (1) according to Claim 5, **characterized in that** said supporting frame (37) comprises:
- a frame (68), fixed to which is said image-acquisition unit (6); and
- a head (70), fixed to said frame (68), fixed in turn to which is a shank (72) including a cylindrical base (73) and a flat terminal (74) having threaded sides (76, 78),
wherein on said cylindrical base (73) there are fitted a ring of elastomeric material (80) and a washer (81) having a central hole (81A) with a conical shape.

7. The apparatus (1) according to Claim 6, **characterized in that** said main body (2) comprises a first side (12) including a through cavity (16) having a substantially quadrangular shape and having a first recess (18) and a second recess (20), which are identical to one another and are set on opposite sides of said through cavity (16), said first side (12) further comprising four threaded holes (22, 24, 26, 28) set around said through cavity, wherein one (28) of said threaded holes has a significantly greater nominal diameter.

8. The apparatus (1) according to Claim 7, **characterized in that**:
- said first plate (34) is set on said first side (12) so that said central through cavity (48) is located in a position corresponding to said through cavity (16) of said first side (12), wherein said dowels (58, 60) are slidably engaged within a respective one of said first and second recesses (18, 20);
- said second plate (36) is set on said first plate (34) so that said eyelet (62) is located in a position corresponding to said central through cavity (48); and
- said flat terminal (74) of said supporting frame (37) traverses said through cavity (16), said central through cavity (48), and said eyelet (62) of said first side (12), said first plate (34), and said second plate (36), respectively,
wherein said first adjustment device further comprises a nut (94) engaged on said flat terminal (74) and provided for gripping said supporting frame (37,70), said ring of elastomeric material (80), said washer (81), and said first and second plates (34, 36) on said first side (12).

9. The apparatus (1) according to Claim 8, **characterized in that**:
- the threaded stretches (380, 400) of said first and second adjustment elements (38, 40) are engaged in a respective threaded hole (54, 56) of said first pair of threaded holes of said first plate (34);
- the conical stretches (381, 401) of said first and second adjustment elements (38, 40) bear upon corresponding adjacent and orthogonal edges (E1, E2) of said second plate (36), wherein said first and second adjustment elements (38, 40) are operable in rotation respectively for governing a first linear movement (δ_{z}) and a first movement of rotation (ϑₓ) of said second plate with respect to said first plate (34) and of said supporting frame (37) and said image-acquisition unit (6) with respect to said optical unit (5);
- the threaded stretch (420) of said third adjustment element (42) is engaged in the threaded hole (28) having a significantly larger diameter provided on said main body;
- the conical stretch (421) of said third adjustment element (42) bears upon a corresponding edge (E3) of said first plate (34), wherein said third adjustment element is operable in rotation for governing a second linear movement (δ_{y}) of said first plate (34) with respect to said first side (12) and of said supporting frame and said image-acquisition unit (6) with respect to said optical unit (5); and
- said fourth and fifth adjustment elements (44, 46) are engaged in a respective threaded hole (66, 64) of said second pair of threaded holes of said second plate (36) and bear upon said first plate (34), wherein each of said fourth and fifth adjustment elements (44, 46) is operable in rotation for governing a second movement of rotation (ϑ_{y}) of said second plate (36) with respect to said first plate (34) and of said supporting frame (37) and said image-acquisition unit (6) with respect to said optical unit (5).

10. The apparatus (1) according to Claim 1, **characterized in that** said adjustment assembly (7) comprises a second adjustment device (9; 109, 122, 123, 124,) connected to said optical unit (5) and provided for varying the position of said optical unit (5) with respect to said acquisition screen (4).
